# EUROPEAN PATENT SPECIFICATION

(11) **EP 2 701 907 B1**
(45) Date of publication and mention of the grant of the patent: **23.05.2018**
(21) Application number: 12726188.1
(22) Date of filing: 26.04.2012
(51) Int. Cl.: E04D 12/00, E04B 1/62, E04B 1/80, B32B 27/18, B32B 27/12

(54) **SHEET FOR WATERPROOFING WALLS, GARRETS OF BUILDINGS AND INSULATING PANELS SUITABLE FOR LIMITING THE PROLIFERATION OF MICRORGANISMS AND INSECTS**
WASSERABDICHTUNGSFOLIE FÜR WÄNDE, BODENKAMMERN VON GEBÄUDEN UND DÄMMPLATTEN ZUR EINDÄMMUNG DER AUSBREITUNG VON MIKRORGANISMEN UND INSEKTEN
FEUILLE POUR IMPERMÉABILISER DES PAROIS ET DES GRENIERS DE BÂTIMENTS ET PANNEAUX ISOLANTS ADAPTÉE À LIMITER LA PROLIFÉRATION DE MICROORGANISMES ET D'INSECTES

(30) Priority: 26.04.2011 IT MI20110695
(43) Date of publication of application: 05.03.2014
(73) Proprietor: Silcart S.p.A., 31030 Carbonera, Frazione Mignagola TV (IT)
(72) Inventor: FAOTTO, Ugo, I-31030 Carbonera, Treviso (IT)
(74) Representative: Mozzi, Matteo
(86) International application number: PCT/IB2012/052080
(87) International publication number: WO 2012/147040

(56) References cited:
- JP-A- 9 048 954
- US-A- 4 617 227
- US-A1- 2002 192 259
- US-A1- 2003 205 007
- US-A1- 2004 185 226

## Description

### Technical field

The present invention refers to a sheet, particularly for waterproofing walls and garrets of buildings.

### Prior art

As known, when making walls, roofs or other structural elements of a building, it is necessary to insert sheets capable of making the roofs or walls waterproof and permeable or impermeable to water vapour, as well as ensuring suitable thermal insulation of the building.

Generally, such waterproof sheets are arranged in ventilation spaces of a roof located below the roof tiles. For example, the sheets are applied on surfaces, made from wood or other materials, comprised in the structure of the roof to define, with the tiles, the aforementioned ventilation spaces. Moreover, waterproof sheets can also be housed inside ventilation chambers or gaps formed inside the walls, or else beneath an insulating layer.

Roofs and walls made waterproof by the aforementioned sheets do, however, suffer from some drawbacks.

Indeed, it has been observed that small animal and/or vegetable organisms, such as bacteria, moulds and insects can become introduced, sediment and nest in the ventilation spaces foreseen under the roof tiles, in the gaps formed in the walls or in analogous ventilation areas of facades foreseen beneath covering layers made from wood, stone or other materials.

Such a phenomenon of accumulation of microorganisms and nesting of insects is known by men skilled in the art by the term "biofouling".

As known, fouling represents a form of biological attack on the infrastructures of a building suitable for attacking and corroding the materials, for example concrete, that make up such infrastructure. Such an aggressive action is, in particular, due to the production of organic acids, generated by the metabolism of microorganisms, insects and the like that, by neutralising the alkalinity of the aggregate, cause its corrosion.

Moreover, it has been observed that the walls of buildings provided with a ventilation chamber suitable for ensuring a direct exchange of air with the atmosphere to optimise the insulation of buildings both in hot months and in cold ones, are particularly subject to nesting phenomena and proliferation of insects, like for example mosquitos, bees and wasps.

### Summary of the invention

The purpose of the present invention is to devise and provide a sheet for waterproofing walls and garrets of buildings that makes it possible to at least partially avoid the aforementioned drawbacks with reference to the phenomenon of accumulation of microorganisms and nesting of insects or biofouling.

Such a purpose is accomplished through a sheet for waterproofing walls and garrets of buildings in accordance with claim 1.

Alternative embodiments of such a sheet are described in the dependent claims 2-9.

Also forming an object of the present invention is a method for manufacturing a waterproofing sheet for walls in accordance with claim 10.

Also forming the object of the present invention is a roof and a wall of a building comprising a waterproofing sheet in accordance with claims 14 and 15. Also forming the object of the invention is an insulating panel comprising a waterproofing sheet described in claim 16.

### Brief description of the drawings

Further characteristics and advantages of the waterproofing sheet according to the invention will become clearer from the following description of preferred embodiments, given for indicating and not limiting purposes, with reference to the attached figures, in which:
- **figure 1** illustrates a first embodiment of a sheet for waterproofing walls and garrets of buildings according to the invention in a perspective view;
- **figure 2** illustrates a second embodiment of the waterproofing sheet of the invention in a perspective view;
- **figure 3** illustrates a third embodiment of the sheet of the invention;
- **figure 4** illustrates a partially open perspective view of a portion of a roof of a building comprising waterproof sheets of the invention;
- **figure 5** illustrates a partially open perspective view of a portion of a wall of a building comprising the waterproof sheets of the invention;
- **figure 6** schematically illustrates an enlargement of a section view of a fourth embodiment of the waterproofing sheet of the invention.

### Detailed description

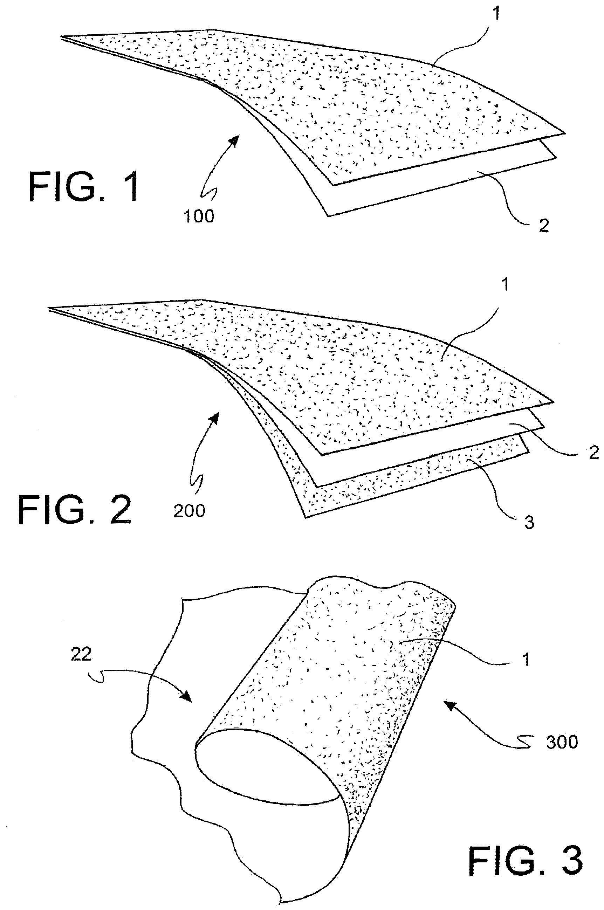

With reference to the aforementioned figures 1-3, a sheet for waterproofing walls and garrets of buildings according to the invention as a whole and in different embodiments is indicated with reference numerals 100, 200, 300. In the aforementioned figure 1-3 elements that are the same or analogous are indicated through the same reference numerals.

Hereafter, by the terms "waterproof" sheet or "waterproofing" sheet, we mean a sheet configured so as to be impermeable to water. On the other hand, according to the applications, such a waterproofing sheet can be made to be permeable to water vapour, or just partially permeable to water vapour, or substantially impermeable to vapour. Moreover, there are sheets configured so as to adapt to the temperature and relative humidity (UR) conditions and work as breathable sheets or as block sheets. Such sheets are generally called Sd-variable sheets. As known to the man skilled in the art, the technical standards relating to permeability to vapour define Sd as the thickness of a layer of immobile air that has the same resistance to diffusion of vapour as the test piece of thickness S. Therefore, the parameter Sd of a sheet characterises it in terms of breathability. For example, a sheet permeable to water vapour or breathable sheet allows about 700-1000 grammes/m² of water vapour to pass in 24h at 23° C, UR 93-50%. A sheet only partially permeable to vapour or block sheet allows about 7-12 grammes/m² UR 0-75% of water vapour to pass in 24h at 23° C. A sheet substantially impermeable to vapour or barrier sheet allows about 2-3 grammes/m² UR 0-75% of water vapour to pass in 24h at 23° C (the aforementioned data was obtained by testing the materials according to the standard EN 13859-1-2).

In reference to figure 1, in a first embodiment, the waterproofing sheet 100 comprises two layers, in particular a framework layer 1 made of fibrous material and a waterproof membrane 2 connected together along the entire surface.

In greater detail, the aforementioned sheet 100 is manufactured through a lamination process that allows the framework layer 1 to be connected to the membrane 2. For example, such a fastening operation can be a cold lamination (ultrasound lamination) or hot lamination (thermobonding), or such a fastening operation is carried out using a glue or through co-extrusion of the membrane.

The framework layer 1 is manufactured from a material selected from among the group consisting of: a synthetic nonwoven fabric or synthetic fabric, such as for example polypropylene, polyester, polyethylene; glass fibre; a synthetic composite nonwoven fabric or synthetic composite fabric; a natural nonwoven fabric or natural fabric.

The membrane 2 is manufactured from a material selected from among the group consisting of: polypropylene; polyethylene; polyester; polyurethane or other polymers.

It should be observed that the framework layer 1 is suitable for giving the sheet 100 a mechanical resistance to pulling away, to crushing and to traction. The membrane 2, as well as giving the sheet 100 waterproof properties, has properties of permeability/impermeability to water vapour. In particular, according to the characteristics of the membrane 2 used, the sheet 100 can be breathable, vapour block, barrier (or Sd variable) as highlighted in the example of classification given above.

Moreover, the waterproofing sheet 100 comprises an additive having antibacterial, anti-mould, anti-fungal, anti-algae and anti-insect properties.

In an embodiment of the sheet 100, just the framework layer 1 comprises the additive.
In further embodiments of the sheet 100, the additive can be comprised just in the membrane 2 or both in the framework layer 1 and in the membrane 2.

Such an additive is a known product marketed with the trademark HEALTHGUARD® by HHL Technology, 18-19 Wrotham Business Park Barnet, Hertfordshire. In greater detail, the additive is a mixture substantially comprising: quaternary ammonium, isothiazolone derivatives and permethrin. As known, quaternary ammonium is ideal for counteracting the proliferation of bacteria, yeasts and moulds. Isothiazolone derivatives, on the other hand, are to be used against mites. Permethrin is a substance that acts to counteract the proliferation of insects like, for example, mosquitos, bees and wasps.

In order to manufacture the aforementioned framework layer 1 made of fibrous material, in particular of the synthetic type like for example polypropylene, polyester, polyethylene, filaments of the synthetic fabric are preliminarily made, which will later be woven to make a fabric. In particular, such filaments are obtained by extrusion of the molten polymeric material obtained, in a conventional extruder, from granules or pellets of the polymer itself.

In particular, in the case of synthetic fabrics the threads that are obtained are wound in reels and then woven in a warp-weft fashion.
In the case of nonwoven fabrics the continuous filaments are obtained again from spinning drawing plates following melting of polymers in an extruder. After extrusion, the filaments are subjected to steps of stretching, for example with compressed air, deposition on a moving mat to form a web and welding, for example, through hot calendering.

A masterbatch is used to manufacture such filaments. As known, such a masterbatch is a solid product (generally made from plastic, rubber or elastomer) formed from pellets of a main or carrier material in which an additive is dispersed in high concentration, for example within the range 30-70%. In the case of the present invention, the dispersed additive is the aforementioned additive having antibacterial, anti-mould, anti-fungal, anti-algae and anti-insect properties. In order to form the masterbatch, the pellets of carrier material are made in the polymeric material that will form the filaments and absorb the additive in liquid form.

The masterbatch of the additive is mixed with pellets of pure polymer, for example polypropylene, polyester, polyethylene, during processing inside the extruder to make the filaments with which the synthetic fabric or nonwoven fabric will be made, in which the additive is incorporated at a concentration of 2-3%.

A second embodiment of the waterproofing sheet 200 is described in reference to figure 2. Such a sheet 200 comprises a first framework layer 1 and a membrane 2 totally analogous to those described in reference to the sheet 100 of figure 1. In addition, the sheet 200 comprises a second framework layer 3 made of fibrous material connected to the membrane 2 over its entire surface. In particular, in the sheet 200 the membrane 2 is interposed between the first 1 and the second 3 framework layer. Such a sheet 200 is also manufactured through a lamination process (using ultrasound, thermobonding or through gluing or co-extrusion of the membrane) to fix the framework layers 1 and 3 to the membrane 2.

The second framework layer 3 is manufactured from a material selected from among the group consisting of: a synthetic nonwoven fabric or synthetic fabric, such as for example polypropylene, polyester, polyethylene; glass fibre; a synthetic composite nonwoven fabric or synthetic composite fabric; a natural nonwoven fabric or natural fabric. Generally, such a second framework layer 3 is lighter than the first framework layer 1 and together with the first layer 1 works to increase the mechanical resistance to pulling away, to crushing and to traction of the sheet 200 with respect to the waterproofing sheet 100.

In order to further improve such properties, in a particular embodiment, the sheet 200 can also comprise a reinforcement net interposed between one of the framework layers 1, 3 and the membrane 2.

In a preferred embodiment of the sheet 200 of figure 2, the second framework layer 3 comprises the additive HEALTHGUARD®. The process for manufacturing such a second framework layer 3, for example made from synthetic material, is analogous to the one described above relative to the first framework layer 1.

In a further embodiment of the waterproofing sheet 200, the first framework layer 1 comprises the additive.

In yet another embodiment of the sheet 200, both the first framework layer 1 and the second framework layer 3 comprise the additive.

In a further embodiment, the membrane 2 of the sheet 200 also comprises the additive.

It should be observed that the waterproof sheets 100 and 200 described above will also be indicated hereafter with the term multi-layer sheets. In such sheets 100, 200 the additive is added in the form of masterbatch to the membrane 2 in a concentration of 2-3% during the extrusion process of the same membrane 2.

A third embodiment of the waterproofing sheet 300 is described in reference to figure 3. Such a sheet 300 comprises a framework layer 1 made of fibrous material and a waterproof membrane layer 22 obtained by surface spreading on the framework layer 1 of compounds including, for example, acrylic resins, polyurethane resins or mixtures of other polymers, and mineral compounds.

The framework layer 1 is manufactured from a material selected from among the group consisting of: a synthetic nonwoven fabric or synthetic fabric, such as for example polypropylene, polyester, polyethylene; a synthetic composite nonwoven fabric or synthetic composite fabric; a natural nonwoven fabric or natural fabric, glass fibre.

In a preferred embodiment of the waterproofing sheet 300, the polyurethane or acrylic resin-based compounds include the aforementioned additive HEALTHGUARD® having antibacterial, anti-mould, anti-fungal (and anti-algae) and anti-insect properties. In particular, such an additive is added in this case in liquid form to the acrylic resin-based compound in the mixing step of such compounds at a concentration of 2-3%. Thereafter, the resin compounds including the additive are spread over the framework layer 1 to obtain the sheet 300. The additive can also be added to the framework 1, in an analogous way to what has been described above, or it can be present both in the compounds and in the framework 1.

Such a waterproof sheet 300 will also be indicated hereafter with the term coating sheet.

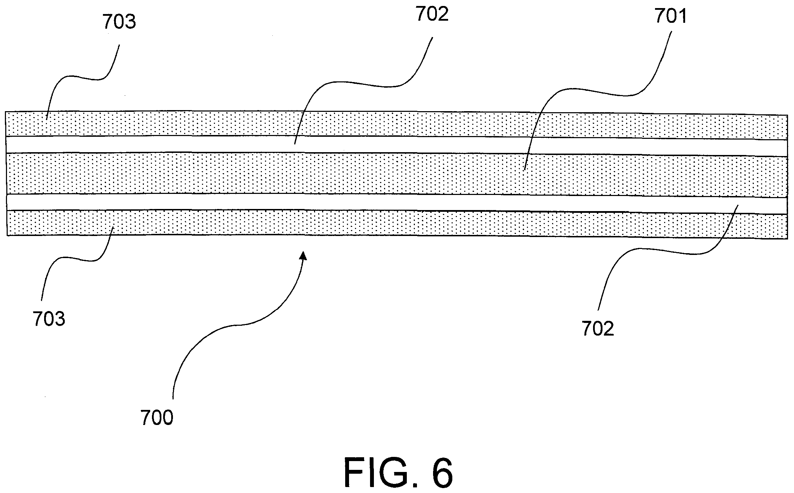

In reference to figure 6, in a fourth embodiment, a multi-layer waterproofing sheet 700 of the invention comprises a first framework layer 701 made of fibrous material analogous to the one described in reference to the sheet 100 of figure 1 interposed between two layers 702 of waterproof membrane comprising a mixture based on bitumen, polymers and a filler. Such a multi-layer sheet 700 also comprises second framework layers 703, in particular two layers, each of which is connected to one of the aforementioned membrane layers 702 along the entire surface. In this way, each layer of bitumen membrane 702 is interposed between the first framework layer 701 and one of the aforementioned second framework layers 703.

Such second framework layers 703 are manufactured from a material selected from among the group consisting of: a synthetic nonwoven fabric or synthetic fabric, such as for example polypropylene, polyester, polyethylene; a synthetic composite nonwoven fabric or synthetic composite fabric; a natural nonwoven fabric or natural fabric; a plastic film. Generally, each of the second framework layers 703 is lighter than the first framework layer 701 and, together with the first layer 701, works to increase the mechanical resistance to pulling away, to crushing and to traction of the multi-layer sheet 700. Such second framework layers 703 are outer finishing layers of the sheet 700.

In a preferred embodiment of the multi-layer sheet 700, the second framework layers 703 comprise the additive.

In another embodiment, the waterproofing membranes 702 manufactured from bituminous mix comprise the additive HEALTHGUARD®. In yet another embodiment, both the membranes 702 and the second framework layers 703 comprise the additive.

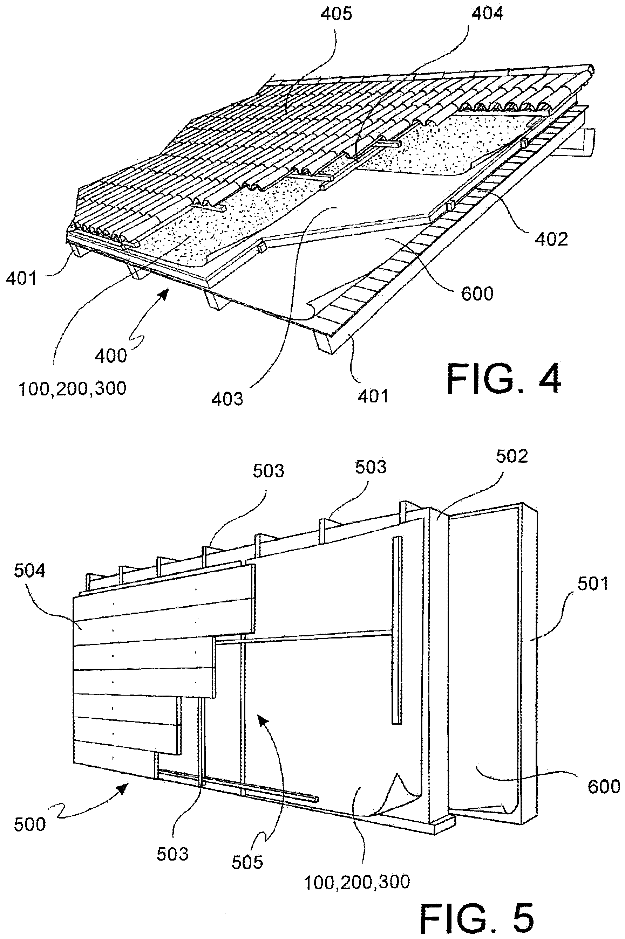

In reference to figure 4 it is possible to describe, for example, one of the possible structures of a roof 400 of a building comprising the waterproof sheets of the invention.

Such a roof 400 comprises a main structure for supporting the roof itself that includes a plurality of beams 401 that are parallel to one another and arranged sloping down. Such beams 401 are manufactured, for example, from wood, cement or other materials. The beams 401 have a boarding 402 on top, for example made from wood, made through suitable male-female joints, fixed to the beams 401 themselves.

On the boarding 402 there is a thermal insulating layer 403 manufactured, for example, through synthetic insulators (panels made from polyurethane, extruded expanded polystyrene, synthesised expanded polystyrene, etc.), mineral fibrous insulators (for example glass wool, rock wool), natural fibrous insulators (for example wood fibre, hemp, cork, etc.).

Moreover, the roof 400 comprises an under-tile frame 404 that includes a plurality of listels forming a grid to support a roof covering 405. Such a covering comprises the tiles or slates.

It should be observed that the under-tile frame 404, together with the thermal insulating layer 403, defines an under-tile ventilation space suitable for receiving one of the multi-layer waterproof sheets 100, 200, or the coating sheet 300 of the present invention. In particular, such a sheet 100 or 200 or coating sheet 300 is laid above the thermal insulating layer 403.

Preferably, the multi-layer waterproof sheets 100, 200 or the coating sheet 300 received in the ventilation space are water vapour-permeable, i.e. they are breathable.

Moreover, the roof 400 comprises an additional waterproofing sheet 600 interposed between the boarding 402 and the thermal insulating layer 403. Such an additional sheet 600 is structurally analogous to one of the aforementioned multi-layer sheets 100, 200, but it possesses characteristics of permeability to water vapour that are different from the latter. For example, such an additional sheet 600 can be just partially permeable to water vapour (block sheet) or substantially impermeable to vapour (barrier sheet) or an Sd-variable sheet.

Advantageously, such an additional sheet 600 can also comprise the aforementioned additive having antibacterial, anti-mould, anti-fungal, anti-algae and anti-insect properties.

In reference to figure 5 it is possible to describe, for example, one of the possible layered structures of a wall 500 of a building comprising the waterproof sheets of the invention.

Such a wall 500 comprises a main wall 501, for example a masonry wall. Proceeding from the inside to the outside of the building, the main wall 501 is coated by a thermal insulating layer 502 manufactured, for example, through synthetic insulators (panels made from polyurethane, extruded expanded polystyrene, synthesised expanded polystyrene, etc.), mineral fibrous insulators (for example glass wool, rock wool), natural fibrous insulators (for example wood fibre, hemp, cork, etc.).

The wall 500 comprises a respective frame formed from a plurality of listels or profiles 503 that are parallel to each other suitable for defining a ventilation chamber or gap 505 of the wall 500 between the insulating layer 502 and an outer finishing layer 504. Such an outer finishing layer 504 is, for example, made through slats, wooden listels, stone or metal slabs, or after the gap there can be a further layer masonry layer.

It should be observed that the aforementioned ventilation chamber 505 is suitable for receiving one of the waterproof sheets of the invention, for example a multi-layer sheet 100, 200, or the coating sheet 300. In particular, such sheets 100, 200, 300 are arranged in the chamber 505 so as to substantially adhere to the thermal insulating layer 502.

Preferably, the waterproof sheets 100, 200, 300 received in the ventilation chamber of the wall 500 are water vapour-permeable, i.e. they are breathable sheets.

Moreover, the wall 500 comprises a respective additional waterproofing sheet 600, analogous to the one described above in reference to figure 4, and arranged in a gap of the wall itself formed between the main wall 501 and the thermal insulating layer 502. Such an additional sheet 600 is, for example, a vapour block sheet or a vapour barrier sheet or an Sd-variable sheet. Advantageously, the additional sheet 600 can also comprise the additive having antibacterial, anti-mould and anti-insect properties.

With reference to figures 4 and 5, as an alternative to the solution in which the insulating layers 403 and 502 are coated through one of the multi-layer sheets 100, 200 or through the coating sheet 300, it is possible to foresee replacing such insulating layers 403, 502 coated with a single insulating panel that comprises a support layer, an insulating layer (for example a mineral insulator) and a multi-layer sheet 100, 200 or else a coating sheet 300 fastened to each other to form a single complex stacked structure. The multi-layer sheets 100, 200 or coating 300 comprised in the structure of the insulating panel are suitable for waterproofing such a panel. In such an insulating panel the additive HEALTHGUARD® is associated with the aforementioned multi-layer sheets 100, 200 or coating sheet 300 of the complex structure.

The sheets 100, 200, 300, 600, 700 of the present invention have numerous advantages.

Indeed, such sheets 100, 200, 300, 600, 700 treated with the additive HEALTHGUARD® make it possible to reduce and at the limit eliminate the microorganisms that build up in the garrets or in the gaps of the walls of buildings. Moreover, the use of the sheets of the invention also makes it possible to reduce the food that sustains such microorganisms, reducing for example the proliferation of bacteria, algae and fungi.

Moreover, the sheets 100, 200, 300, 600, 700 perform a function of strong repellence for insects, like for example, mosquitos, bees and wasps. In particular, the sheet coating 300 treated with the additive can, advantageously, be used in masonry structures with ventilated wall, and it reduces the unwanted nesting of such insects.

The Applicant has noted that the multi-layer sheets 100, 200, 600, 700 and the coating sheet 300 treated with additive and used in the under-tile ventilation spaces limit the development of colonies of insects in such spaces. In this way, the phenomenon of biofouling is avoided and the rotting of the beams and of the wooden structures of the roof slows down, as well as the degradation of the cement structures relative to the roof, slows down. Therefore, the aforementioned sheets preserve the structure of the building as well as contributing to the healthiness of the building itself.

Moreover, advantageously, the treatment of the sheets 100, 200, 300, 600, 700 with the additive is not washed away following contact with atmospheric agents, and therefore it is permanent. Indeed, an experimental study has been carried out to verify the repellent effect on test insects by fabrics made from polymeric material, for example polyester, impregnated with the additive HEALTHGUARD® in the form of masterbatch. Such a study examined four samples of impregnated fabric: the first sample did not undergo washing, the second sample underwent ten washes, the third twenty washes and the fourth thirty washes. Moreover, a fifth sample of fabric that was not impregnated was used as control. By analysing the effects of repellence on insects of the aforementioned four samples in an examination time period of twenty-four hours, it emerged that the impregnated fabrics that underwent washing are able to eliminate all of the test insects (100% efficiency) during the examination period in the same way as the first fabric that did not undergo washing. Contrarily, substantially no repellent effect was carried out by the fifth sample fabric.

The Applicant has surprisingly found that, among the various substances or insecticides present on the market, the selected additive has the advantage of keeping the effects of insect-repellence substantially unchanged despite the washing action of rain or snow. Without being linked to a particular theory, we believe that this is due both to the ability to bond stably with the fibres of the material in which it is impregnated, and to the process used to incorporate it in the sheet, which foresees the use of a masterbatch and the inclusion in the extrusion step.

The sheets 100, 200, 300, 600, 700 are not harmful to health or to the environment since such sheets are preventing from releasing harmful substances. Indeed, the additive used to treat the aforementioned sheets is a 98% biodegradable organic product that is not volatile and has no traces of metals. Moreover, the sheets 100, 200, 300, 600, 700 comprising the additive are anallergic both to man and to domestic animals and they are resistant to ultraviolet (UV) rays.

Moreover, treatment with the additive keeps the other special properties of the sheets substantially unchanged, relating to the transmission of water vapour, to impermeability, to mechanical resistance to pulling away, crushing and traction.

A man skilled in the art can bring modifications, adaptations and replacements of elements with other functionally equivalent ones to the embodiments of a sheet for waterproofing walls and garrets of buildings described above, in order to satisfy contingent requirements, without departing from the scope of the following claims. Each of the characteristics described as belonging to a possible embodiment can be made independently from the other described embodiments.

## Claims

1. Sheet (100; 200; 300; 600; 700) for waterproofing walls and garrets of buildings, comprising:
- a framework layer (1; 701) made of fibrous material;
- a waterproof membrane (2; 22; 702), said framework layer and said membrane being connected to each other along their entire surface;
- an additive having antibacterial, anti-mould, anti-fungal and anti-insect properties,
wherein at least one of said framework layer (1; 701) and said membrane (2; 22; 702) comprises the additive,
**characterised in that** said additive is a mixture comprising:
- quaternary ammonium,
- isothiazolone derivatives,
- permethrin.

2. Sheet (100; 200; 300; 600; 700) according to claim 1, wherein said waterproof membrane (2; 22; 702) is also water vapour impermeable, or vapour permeable or has variable Sd values as described in the application specification.

3. Sheet (200; 600) according to claim 1, comprising a further framework layer (3) made of fibrous material, said membrane (2) being interposed between said framework layer (1) and the further framework layer.

4. Sheet (200; 600) according to claim 3, wherein said further framework layer (3) comprises the additive.

5. Sheet (200; 600) according to claim 3, wherein both the framework layer (1), and the further framework layer (3) and also the membrane (2) comprise the additive.

6. Sheet (100; 200; 300; 600; 700) according to claim 1, wherein said framework layer (1; 701) is manufactured from a material selected from among the group consisting of:
- a synthetic nonwoven fabric or synthetic fabric, such as for example polypropylene, polyester, polyethylene;
- glass fibre;
- a synthetic composite nonwoven fabric or synthetic composite fabric;
- a natural nonwoven fabric or natural fabric.

7. Sheet (100; 200; 300; 600) according to claim 1, wherein said membrane (2; 22) is manufactured from a material selected from among the group consisting of:
- polypropylene;
- polyethylene;
- polyester;
- polyurethane;
- acrylic resin-based compound;
- polyurethane resin-based compound;
- mineral coatings;
- other polymers.

8. Sheet (200; 600) according to claim 3, wherein said further framework layer (3) is manufactured from a material selected from among the group consisting of:
- a synthetic nonwoven fabric or synthetic fabric, such as for example polypropylene, polyester, polyethylene;
- glass fibre;
- a synthetic composite nonwoven fabric or synthetic composite fabric;
- a natural nonwoven fabric or natural fabric.

9. Sheet (200) according to claim 3, further comprising a reinforcement net interposed between one of said layer (1) and further framework layer (3) and membrane (2).

10. Method for manufacturing a sheet (100; 200; 300; 600; 700) for waterproofing walls and garrets of buildings, comprising the steps of:
- manufacturing a framework layer (1, 3; 701, 703) of said sheet from a polymeric material, comprising the steps of:
- mixing, inside an extruder, such a pure polymeric material with a masterbatch of said
material in which an additive having antibacterial, anti-mould, anti-fungal and anti-insect properties is dispersed, said additive being a mixture comprising quaternary ammonium, isothiazolone derivatives and permethrin,
- extruding filaments of the polymeric material obtained by mixing the pure polymeric material with the masterbatch;
- weaving said filaments to form said woven framework layer (1, 3; 701, 703) or working them to make said nonwoven fabric framework layer;
- manufacturing a waterproof membrane (2; 22; 702);
- connecting together said framework layer (1; 701) and said membrane (2; 22; 702) along their entire surface.

11. Method for manufacturing a sheet (100; 200; 300; 600; 700) according to claim 10, wherein said additive is incorporated in said filaments at a concentration of 2-3%.

12. Method for manufacturing a sheet (300) according to claim 10, wherein said step of manufacturing the membrane (22) comprises the steps of:
- mixing the additive at a concentration of 2-3% with acrylic resin-based compounds, mixtures of polymers, or mineral compounds to obtain a first mixture;
- spreading said first mixture over said framework layer (1).

13. Method for manufacturing a sheet (100; 200; 600) according to claim 10, wherein said step of manufacturing the membrane (2) comprises the steps of:
- mixing, inside an extruder, a first pure polymeric material with a masterbatch of said first material in which the additive having antibacterial, anti-mould, anti-fungal and anti-insect properties is dispersed,
- extruding the membrane (2) in which the additive is incorporated at a concentration of 2-3%.

14. Roof (400) of a building comprising:
- a main structure for supporting the roof (401, 402) ;
- a thermal insulating layer (403) arranged on said main support structure;
- an under-tile frame (404) provided above the insulating layer and adapted to sustain a roof covering (405) ;
- at least one waterproofing sheet (100; 200; 300; 600) according to claim 1.

15. Wall (500) of a building, comprising:
- a main wall (501);
- a thermal insulating layer (502) for coating said main wall;
- a respective frame (503) interposed between said insulating layer (502) and an outer layer (504) of the wall;
- at least one waterproofing sheet (100; 200; 300; 600) according to claim 1.

16. Insulating panel comprising:
- a support layer;
- an insulating layer,
- a waterproofing sheet according to at least one of claims 1-9,
fastened to each other to form a single stacked structure.

17. Sheet (700) according to claim 1, comprising a first framework layer (703), said membrane (702) being interposed between said framework layer (701) and the first framework layer (703).

18. Sheet (700) according to claim 17, wherein said first framework layer (703) comprises the additive.

19. Sheet according to claim 1, wherein said waterproofing membrane is manufactured with a mixture comprising: bitumen, polymers, a filler and said additive having antibacterial, anti-mould and anti-insect properties.

## Patentansprüche

1. Folie (100; 200; 300; 600; 700) zum Abdichten von Wänden und Dachkammern von Gebäuden gegen Wasser, umfassend:
- eine Gerüstschicht (1; 701) aus Fasermaterial;
- eine wasserdichte Membran (2; 22; 702), wobei die Gerüstschicht und die Membran entlang ihrer gesamten Oberfläche miteinander verbunden sind;
- einen Zusatzstoff mit antibakteriellen, schimmel-, pilz- und insektenhemmenden Eigenschaften,
wobei mindestens eines aus der Gerüstschicht (1; 701) und der Membran (2; 22; 702) den Zusatzstoff enthält,
**dadurch gekennzeichnet, dass** der Zusatzstoff ein Gemisch ist, umfassend:
- quartäres Ammonium,
- Isothiazolonderivate,
- Permethrin.

2. Folie (100; 200; 300; 600; 700) nach Anspruch 1, wobei die wasserdichte Membran (2; 22; 702) ebenfalls wasserdampfundurchlässig oder dampfdurchlässig ist oder variable Sd-Werte aufweist, wie in der Beschreibung der Anmeldung beschrieben.

3. Folie (200; 600) nach Anspruch 1, umfassend eine weitere Gerüstschicht (3) aus Fasermaterial, wobei die Membran (2) zwischen der Gerüstschicht (1) und der weiteren Gerüstschicht angeordnet ist.

4. Folie (200; 600) nach Anspruch 3, wobei die weitere Gerüstschicht (3) den Zusatzstoff umfasst.

5. Folie (200; 600) nach Anspruch 3, wobei sowohl die Gerüstschicht (1) als auch die weitere Gerüstschicht (3) sowie die Membran (2) den Zusatzstoff umfassen.

6. Folie (100; 200; 300; 600; 700) nach Anspruch 1, wobei die Gerüstschicht (1; 701) aus einem Material hergestellt ist, das ausgewählt ist aus der Gruppe, bestehend aus:
- einem synthetischen Vliesstoff oder synthetischen Stoff wie zum Beispiel Polypropylen, Polyester, Polyethylen;
- Glasfaser;
- einem synthetischen Verbundvlies oder synthetischen Verbundstoff;
- einem natürlichen Vliesstoff oder natürlichen Stoff.

7. Folie (100; 200; 300; 600) nach Anspruch 1, wobei die Membran (2; 22) aus einem Material hergestellt ist, das ausgewählt ist aus der Gruppe, bestehend aus:
- Polypropylen;
- Polyethylen;
- Polyester;
- Polyurethan;
- Verbundstoff auf Acrylharzbasis;
- Verbundstoff auf Polyurethanharzbasis;
- mineralischen Beschichtungen;
- anderen Polymeren.

8. Folie (200; 600) nach Anspruch 3, wobei die weitere Gerüstschicht (3) aus einem Material hergestellt ist, das ausgewählt ist aus der Gruppe, bestehend aus:
- einem synthetischen Vliesstoff oder synthetischen Stoff wie zum Beispiel Polypropylen, Polyester, Polyethylen;
- Glasfaser;
- einem synthetischen Verbundvlies oder synthetischen Verbundstoff;
- einem natürlichen Vliesstoff oder natürlichen Stoff.

9. Folie (200) nach Anspruch 3, ferner umfassend ein Verstärkungsnetz, das zwischen einer der Schicht (1) und der weiteren Gerüstschicht (3) und der Membran (2) angeordnet ist.

10. Verfahren zum Herstellen einer Folie (100; 200; 300; 600; 700) zum Abdichten von Wänden und Dachkammern von Gebäuden, gegen Wasser, umfassend die Schritte:
- Herstellen einer Gerüstschicht (1, 3; 701, 703) der Folie aus einem Polymermaterial, umfassend die Schritte:
- Vermischen eines derartigen reinen Polymermaterials in einem Extruder mit einem Masterbatch des Materials, in dem ein Zusatzstoff mit antibakteriellen, schimmel-, pilz- und insektenhemmenden Eigenschaften dispergiert ist, wobei der Zusatzstoff ein Gemisch ist, das quartäres Ammonium, Isothiazolonderivate und Permethrin umfasst,
- Extrudieren von Fäden des Polymermaterials, das durch Vermischen des reinen Polymermaterials mit dem Masterbatch erhalten wurde;
- Weben der Fäden, um die gewebte Gerüstschicht (1, 3; 701, 703) zu bilden oder Verarbeiten der Fäden, um die Vliesstoffgerüstschicht herzustellen;
- Herstellen einer wasserdichten Membran (2; 22; 702);
- Verbinden der Gerüstschicht (1; 701) und der Membran (2; 22; 702) entlang ihrer gesamten Oberfläche.

11. Verfahren zum Herstellen einer Folie (100; 200; 300; 600; 700) nach Anspruch 10, wobei der Zusatzstoff in den Fäden mit einer Konzentration von 2 bis 3 % enthalten ist.

12. Verfahren zum Herstellen einer Folie (300) nach Anspruch 10, wobei der Schritt des Herstellens der Membran (22) die Schritte umfasst:
- Vermischen des Zusatzstoffs mit einer Konzentration von 2 bis 3 % mit Verbundstoffen auf Acrylharzbasis, Gemischen von Polymeren oder Mineralverbundstoffen, um ein erstes Gemisch zu erhalten;
- Verteilen des ersten Gemischs über der Gerüstschicht (1) .

13. Verfahren zum Herstellen einer Folie (100; 200; 600) nach Anspruch 10, wobei der Schritt des Herstellens der Membran (2) die Schritte umfasst:
- Vermischen eines ersten reinen Polymermaterials mit einem Masterbatch des ersten Materials, in dem der Zusatzstoff mit antibakteriellen, schimmel-, pilz- und insektenhemmenden Eigenschaften dispergiert ist, innerhalb eines Extruders,
- Extrudieren der Membran (2), in der der Zusatzstoff mit einer Konzentration von 2 bis 3 % enthalten ist.

14. Dach (400) eines Gebäudes, umfassend:
- eine Hauptstruktur zum Tragen des Dachs (401, 402);
- eine Wärmedämmschicht (403), die auf der Hauptträgerstruktur angeordnet ist;
- einen Rahmen (404) unter den Dachziegeln, der über der Dämmschicht bereitgestellt und ausgelegt ist, um eine Dachabdeckung (405) zu tragen;
- mindestens eine Wasserabdichtungsfolie (100; 200; 300; 600) nach Anspruch 1.

15. Wand (500) eines Gebäudes, umfassend:
- eine Hauptwand (501);
- eine Wärmedämmschicht (502) zum Beschichten der Hauptwand;
- einen jeweiligen Rahmen (503), der zwischen der Dämmschicht (502) und einer äußeren Schicht (504) der Wand angeordnet ist;
- mindestens eine Wasserabdichtungsfolie (100; 200; 300; 600) nach Anspruch 1.

16. Dämmplatte, umfassend:
- eine Trägerschicht;
- eine Dämmschicht,
- eine Wasserabdichtungsfolie nach mindestens einem der Ansprüche 1 bis 9,
aneinander befestigt, um eine einzige gestapelte Struktur zu bilden.

17. Folie (700) nach Anspruch 1, umfassend eine erste Gerüstschicht (703), wobei die Membran (702) zwischen der Gerüstschicht (701) und der ersten Gerüstschicht (703) angeordnet ist.

18. Folie (700) nach Anspruch 17, wobei die erste Gerüstschicht (703) den Zusatzstoff umfasst.

19. Folie nach Anspruch 1, wobei die Wasserabdichtungsmembran mit einem Gemisch hergestellt ist, umfassend: Bitumen, Polymere, einen Füllstoff und den Zusatzstoff, der antibakterielle, schimmel- und insektenhemmende Eigenschaften aufweist.

## Revendications

1. Feuille (100 ; 200 ; 300 ; 600 ; 700) destinée à l'imperméabilisation de murs et greniers de bâtiments, comprenant :
- une couche cadre (1 ; 701) constituée de matériau fibreux ;
- une membrane imperméable à l'eau (2 ; 22 ; 702), ladite couche cadre et ladite membrane étant reliées l'une à l'autre le long de toute leur surface ;
- un additif ayant des propriétés anti-bactériennes, anti-moisissures, antifongiques et anti-insectes,
dans laquelle au moins un élément parmi ladite couche cadre (1 ; 701) et ladite membrane (2 ; 22 ; 702) comprend l'additif,
**caractérisée en ce que** ledit additif est un mélange comprenant :
- de l'ammonium quaternaire,
- des dérivés d'isothiazolone,
- de la perméthrine.

2. Feuille (100 ; 200 ; 300 ; 600 ; 700) selon la revendication 1, dans laquelle ladite membrane imperméable à l'eau (2 ; 22 ; 702) est également imperméable à la vapeur d'eau ou perméable à la vapeur ou présente des valeurs Sd variables de la manière décrite dans la spécification de la demande.

3. Feuille (200 ; 600) selon la revendication 1, comprenant une autre couche cadre (3) constituée de matériau fibreux, ladite membrane (2) étant intercalée entre ladite couche cadre (1) et l'autre couche cadre.

4. Feuille (200 ; 600) selon la revendication 3, dans laquelle ladite autre couche cadre (3) comprend l'additif.

5. Feuille (200 ; 600) selon la revendication 3, dans laquelle la couche cadre (1) et l'autre couche cadre (3), ainsi que la membrane (2) comprennent l'additif.

6. Feuille (100 ; 200 ; 300 ; 600 ; 700) selon la revendication 1, dans laquelle ladite couche cadre (1 ; 701) est fabriquée à partir d'un matériau choisi dans le groupe constitué des éléments suivants :
- un tissu non tissé synthétique ou un tissu synthétique, comme par exemple le polypropylène, le polyester, le polyéthylène ;
- de la fibre de verre ;
- un tissu non tissé composite synthétique ou un tissu composite synthétique ;
- un tissu non tissé naturel ou un tissu naturel.

7. Feuille (100 ; 200 ; 300 ; 600) selon la revendication 1, dans laquelle ladite membrane (2 ; 22) est fabriquée à partir d'un matériau choisi dans le groupe constitué des éléments suivants :
- le polypropylène ;
- le polyéthylène ;
- le polyester ;
- le polyuréthane ;
- un composé à base de résine acrylique ;
- un composé à base de résine de polyuréthane ;
- des revêtements minéraux ;
- d'autres polymères.

8. Feuille (200 ; 600) selon la revendication 3, dans laquelle ladite autre couche cadre (3) est fabriquée à partir d'un matériau choisi dans le groupe constitué des éléments suivants :
- un tissu non tissé synthétique ou un tissu synthétique, comme par exemple le polypropylène, le polyester, le polyéthylène ;
- de la fibre de verre ;
- un tissu non tissé composite synthétique ou un tissu composite synthétique ;
- un tissu non tissé naturel ou un tissu naturel.

9. Feuille (200) selon la revendication 3, comprenant en outre un filet de renfort intercalé entre un élément parmi ladite couche (1) et l'autre couche cadre (3) et la membrane (2).

10. Procédé de fabrication d'une feuille (100 ; 200 ; 300 ; 600 ; 700) destinée à l'imperméabilisation de murs et greniers de bâtiments, comprenant les étapes consistant à :
- fabriquer une couche cadre (1, 3 ; 701, 703) de ladite feuille à partir d'un matériau polymère, comprenant les étapes consistant à :
- mélanger, à l'intérieur d'une extrudeuse, un tel matériau polymère pur avec un mélange-maître dudit matériau, dans lequel un additif ayant des propriétés anti-bactériennes, anti-moisissures, anti-fongiques et anti-insectes est dispersé, ledit additif étant un mélange comprenant de l'ammonium quaternaire, des dérivés d'isothiazolone et de la perméthrine ;
- extruder des filaments du matériau polymère obtenu par mélange du matériau polymère pur avec le mélange-maître ;
- tisser lesdits filaments afin de former ladite couche cadre tissée (1, 3 ; 701, 703) ou les travailler pour réaliser ladite couche cadre en tissu non tissé ;
- fabriquer une membrane imperméable à l'eau (2 ; 22 ; 702) ;
- relier ensemble ladite couche cadre (1 ; 701) et ladite membrane (2 ; 22 ; 702) le long de toute leur surface.

11. Procédé de fabrication d'une feuille (100 ; 200 ; 300 ; 600 ; 700) selon la revendication 10, dans lequel ledit additif est incorporé dans lesdits filaments à une concentration de 2 % à 3 %.

12. Procédé de fabrication d'une feuille (300) selon la revendication 10, dans lequel ladite étape de fabrication de la membrane (22) comprend les étapes consistant à :
- mélanger l'additif à une concentration de 2 % à 3 % avec des composés à base de résine acrylique, des mélanges de polymères ou des composés minéraux afin d'obtenir un premier mélange ;
- étaler ledit premier mélange sur ladite couche cadre (1).

13. Procédé de fabrication d'une feuille (100 ; 200 ; 600) selon la revendication 10, dans lequel ladite étape de fabrication de la membrane (2) comprend les étapes consistant à :
- mélanger, à l'intérieur d'une extrudeuse, un premier matériau polymère pur avec un mélange-maître dudit premier matériau, dans lequel l'additif ayant des propriétés anti-bactériennes, anti-moisissures, anti-fongiques et anti-insectes est dispersé,
- extruder la membrane (2) dans laquelle l'additif est incorporé à une concentration de 2 % à 3 %.

14. Toit (400) d'un bâtiment comprenant :
- une structure principale pour supporter le toit (401, 402) ;
- une couche d'isolation thermique (403) disposée sur ladite structure de support principale ;
- un cadre sous-tuiles (404) prévu au-dessus de la couche isolante et apte à soutenir un revêtement de toit (405) ;
- au moins une feuille d'imperméabilisation (100 ; 200 ; 300 ; 600) selon la revendication 1.

15. Mur (500) d'un bâtiment comprenant :
- un mur principal (501) ;
- une couche d'isolation thermique (502) pour revêtir ledit mur principal ;
- un cadre respectif (503) intercalé entre ladite couche isolante (502) et une couche externe (504) du mur ;
- au moins une feuille d'imperméabilisation (100 ; 200 ; 300 ; 600) selon la revendication 1.

16. Panneau d'isolation comprenant :
- une couche de support,
- une couche d'isolation,
- une feuille d'imperméabilisation selon au moins une des revendications 1 à 9,
fixées les unes aux autres pour former une seule structure empilée.

17. Feuille (700) selon la revendication 1, comprenant une première couche cadre (703), ladite membrane (702) étant intercalée entre ladite couche cadre (701) et la première couche cadre (703).

18. Feuille (700) selon la revendication 17, dans laquelle ladite première couche cadre (703) comprend l'additif.

19. Feuille selon la revendication 1, dans laquelle ladite membrane d'imperméabilisation est fabriquée avec un mélange comprenant : du bitume, des polymères, une charge et ledit additif ayant les propriétés anti-bactériennes, anti-moisissures et anti-insectes.
